Europäisches Patentamt

(19) European Patent Office

Office européen des brevets

(11) Numéro de publication: **0 283 361**
**B1**

(12) **FASCICULE DE BREVET EUROPEEN**

(45) Date de publication du fascicule du brevet:
28.11.90

(51) Int. Cl.⁵: **B60N 2/22**

(21) Numéro de dépôt: 88400428.4

(22) Date de dépôt: 24.02.88

(54) Partie de jonction conformée de tube d'armature de siège avec un mécanisme de réglage d'inclinaison du dossier.

(30) Priorité: 04.03.87 FR 8702953

(43) Date de publication de la demande:
21.09.88 Bulletin 88/38

(45) Mention de la délivrance du brevet:
28.11.90 Bulletin 90/48

(84) Etats contractants désignés:
AT BE CH DE ES GB GR IT LI LU NL SE

(56) Documents cités:
FR-A- 2 323 546
FR-A- 2 510 375
GB-A- 2 036 550
GB-A- 2 088 711

(73) Titulaire: A. & M. COUSIN Etablissements COUSIN
FRERES, Le Bois de Flers, F-61103 Flers Cédex
Orne(FR)

(72) Inventeur: Droulon, Georges, Rue de la Garenne St
Georges des Groseilliers, F-61100 Flers(FR)
Inventeur: Pipon, Yves, La Garenne St Georges des
Groseilliers, F-61100 Flers(FR)

(74) Mandataire: Madeuf, Claude Alexandre Jean et al,
CABINET MADEUF 3, avenue Bugeaud,
F-75116 Paris(FR)

ACTORUM AG

## Description

Les sièges pour véhicules terrestres, nautiques et aériens, mais surtout les sièges utilisés dans les véhicules automobiles, comportent maintenant des mécanismes d'articulation placés entre l'armature de l'assise et l'armature du dossier pour permettre de régler sans jeu et avec une grande précision l'inclinaison du dossier par rapport à l'assise afin d'assurer au passager comme au conducteur du véhicule un confort maximum évitant la fatigue.

On connaît déjà des mécanismes d'articulation, ayant un volume cylindrique très faible car ils sont d'une épaisseur très petite et d'un diamètre de quelques centimètres, et qui peuvent donc s'adapter d'une manière très simple dans des armatures de siège réalisées en tôle en fixant, par des moyens divers sur l'armature de l'assise, l'un des flasques du mécanisme d'articulation et, sur la partie basse de l'armature du dossier, l'autre flasque du mécanisme.

La jonction du mécanisme d'articulation avec l'armature en tôle du siège ne pose donc pas de difficulté mais il n'en est pas de même lorsque l'armature du siège est tubulaire car, jusqu'à ce jour, on était amené à fixer, sur les extrémités des tubes de l'armature de l'assise et de l'armature du dossier, des plaques intermédiaires formant flasques pour ensuite positionner le mécanisme d'articulation entre assise et dossier mais, comme cela est évident, la mise en place de pièces complémentaires présentait de nombreux inconvénients. En effet :

a) ce montage était disgracieux, volumineux et donc difficilement utilisable dans les véhicules modernes dont les habitacles sont aussi réduits que possible,

b) ces pièces complémentaires devaient être usinées et parfois traitées thermiquement, d'où un prix de revient élevé s'ajoutant au prix de l'équipement normal des mécanismes d'articulation,

c) il est très difficile de faire des montages corrects parfaitement symétriques d'un côté et de l'autre du siège de par l'adjonction de pièces de liaison qui, soudées sur les tubes, ne peuvent garantir un alignement correct des mécanismes. En effet, il faut que les positions d'assemblage, c'est-à-dire les alignements des carrés d'entraînement, ne soient pas modifiées par les points de fixation situés sur les parties fixe et mobile du mécanisme d'articulation. Dans le cas contraire, l'enfilage de la barre de commande des articulations par machine n'est plus possible automatiquement puisqu'il y a déport angulaire des carrés. On est obligé alors d'avoir une intervention manuelle pour aligner les carrés, ce qui grève d'autant le jeu de l'ensemble ; en effet, le tube de jonction étant soudé sur points tangents à son diamètre extérieur, un moment de torsion est alors obtenu, ce qui provoque un plus grand fléchissement du dossier (environ le double).

La présente invention remédie à ces inconvénients en créant une partie de jonction conformée des extrémités des tubes d'armature de l'assise et du dossier afin que chaque mécanisme d'articulation permettant le réglage de l'inclinaison du dossier soit directement monté sur les armatures en réduisant ainsi considérablement le prix de revient du siège.

Conformément à l'invention, le siège comportant une assise et un dossier ayant chacun une armature tubulaire et reliés entre eux par un mécanisme de réglage d'inclinaison entre l'assise et le dossier, ledit mécanisme de réglage d'inclinaison comprenant des flasques fixés à l'armature de l'assise et/ou du dossier est caractérisé en ce que chaque extrémité de l'armature de l'assise et du dossier est déformée par emboutissage, ou moyens analogues, pour obtenir une surface plane convenablement raidie par des zones d'épaississement ou des lèvres débordantes assurant de ce fait une parfaite application de l'extrémité conformée du tube sur la face du flasque considéré du mécanisme d'articulation puis ces pièces sont reliées les unes aux autres par différents moyens de fixation en utilisant, pour le centrage de ces pièces les unes par rapport aux autres, les pions de jonction de chaque flasque du mécanisme d'articulation.

Les extrémités des tubes formant l'armature de l'assise et du dossier du siège avec les flasques fixe et mobile des mécanismes d'articulation sont reliées les unes aux autres par soudure avec apport, par l'emploi des pions de jonction de chaque mécanisme d'articulation et de points de soudure sur la face arrière plane de la partie conformée.

Les liaisons flasques/tubes, suivant certaines configurations des formes extrêmes des tubes, permettent également l'emploi de solutions vis – écrous ou rivets solidaires des flasques. La bonne tenue du tube est obtenue par le fait que les efforts de flexion passent dans l'axe du tube évitant ainsi sa torsion.

Diverses autres caractéristiques de l'invention ressortent d'ailleurs de la description détaillée qui suit.

Des formes de réalisation de l'objet de l'invention sont représentées à titre d'exemples aux dessins annexés.

La fig. 1 est une élévation latérale de l'extrémité conformée du tube de l'armature du dossier par exemple.

La fig. 2 est une vue de face correspondant à la fig. 1.

La fig. 3 montre, partie en coupe, la mise en place de l'extrémité conformée du tube sur un mécanisme d'articulation.

La fig. 4 est une vue en plan correspondant à la fig. 3.

La fig. 4a est une coupe sensiblement suivant la ligne IV-IV de la fig. 4.

Les fig. 5, 6 et 7 montrent, respectivement, une vue en élévation, partie en coupe, une vue en plan et une vue en coupe transversale, d'une autre forme de la partie conformée de jonction d'un tube d'armature d'assise ou de dossier d'un siège en vue de sa jonction avec un mécanisme d'articulation.

Les fig. 8, 9 et 10 montrent, respectivement, une vue en élévation, partie en coupe, une vue en plan et une vue en coupe transversale, d'une troisième variante de la partie conformée de jonction d'un tube d'armature d'assise ou de dossier.

Les fig. 11, 12 et 13 sont, respectivement, une vue en plan, une vue en élévation latérale, partie en coupe, et une vue en coupe transversale, d'une quatrième forme de réalisation de la partie conformée de jonction d'un tube de dossier ou d'assise de siège.

La fig. 14 est une vue, en perspective, d'une armature partielle tubulaire d'un siège avec ses mécanismes d'articulation.

La fig. 15 est une élévation de face d'un mécanisme d'articulation fixé sur l'un des côtés du siège par les parties conformées de jonction des tubes d'assise et de dossier.

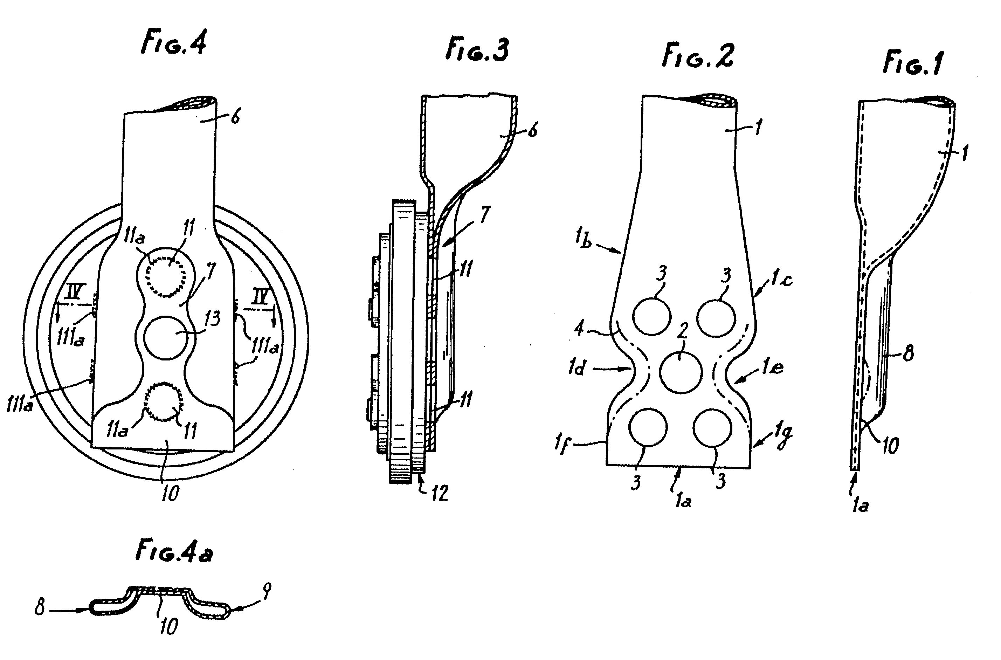

Aux fig. 1 et 2, on a représenté l'extrémité d'un tube 1 à section ronde de l'armature d'un dossier de siège qui a subi une conformation de jonction par une passe de travail de façon à former, sur l'extrémité 1a du tube, une zone plate élargie à la partie supérieure en 1b, 1c rétrécie dans les zones 1d, 1e puis de nouveau élargie dans les zones terminales 1f, 1g.

Comme cela est visible à la fig. 2, l'emboutissage de l'extrémité inférieure du tube 1 permet la création de trous 3 disposés à des emplacements prédéterminés pour la jonction de l'extrémité du tube avec l'un des flasques du mécanisme d'articulation.

De plus, il est prévu, dans la zone rétrécie comprise entre les parties 1d et 1e, un passage circulaire 2 destiné à la mise en place du dispositif de commande du ou des mécanismes d'articulation.

On peut également voir sur la fig. 2 des zones d'épaississement 4 et 5 destinées à renforcer la partie du tube 1 s'adaptant sur l'un des flasques du mécanisme d'articulation.

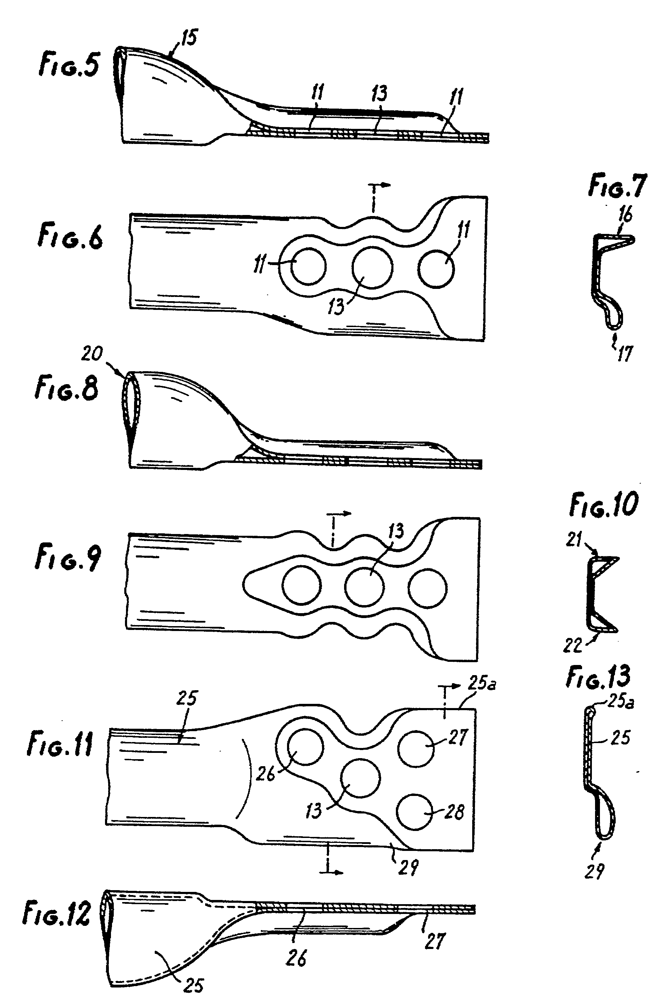

En ce qui concerne les fig. 3, 4 et 4a, l'extrémité inférieure du tube référencé en 6 est aplatie en 7 de façon à former deux lèvres extérieures 8 et 9 non contiguës, tandis que la zone centrale 10 est ramenée à l'épaisseur des parois du tube et cette zone est percée de trous 11 pour le passage de pions soudés en 11a et permettant la fixation du tube 6 sur l'un des flasques 12 du mécanisme d'articulation tandis qu'une ouverture centrale 13 permet le passage de l'arbre de la commande unique du ou des mécanismes d'articulation.

Comme cela est visible à la fig. 4 en plus des jonctions par soudure 11a des pions de l'un des flasques du mécanisme d'articulation, il est prévu d'effectuer, sur la face arrière de la partie aplatie 7, des points de soudure 111a. Ces soudures sont effectuées en arrière de la zone aplatie 7 de façon à permettre un travail en compression de ces points de soudure qui ainsi résistent beaucoup mieux.

Dans le cas des fig. 5 à 7, l'extrémité du tube référencé en 15 a été conformée d'une manière sensiblement semblable au cas des fig. 3 et 4 mais la lèvre 16 (voir fig. 7) est perpendiculaire au plan de jonction des parois du tube 15 avec le mécanisme d'articulation tandis que la lèvre 17 tend à s'étendre parallèlement au plan médian du mécanisme d'articulation.

En ce qui concerne les fig. 8 à 10, l'extrémité du tube référencé en 20 est conformée de façon à présenter deux lèvres verticales 21, 22 perpendiculaires au plan de jonction des parois du tube par rapport au mécanisme d'articulation.

De plus, la partie amincie plane centrale de la zone de jonction des parois du tube forme des lèvres de renfort.

Finalement, les fig. 11 à 13 montrent une disposition asymétrique de l'extrémité aplatie du tube référencé en 25 de façon à ce que la jonction avec le flasque considéré du mécanisme d'articulation se fasse en trois points 26, 27, 28, l'ouverture centrale 13 étant destinée au passage de la commande unique et combinée des deux mécanismes d'articulation. Cela est d'autant plus visible que la fig. 13 montre un bourrelet 25a et une lèvre 29 asymétrique proéminente assurant, du fait de son emplacement, un renfort latéral de l'extrémité aplatie du tube 25.

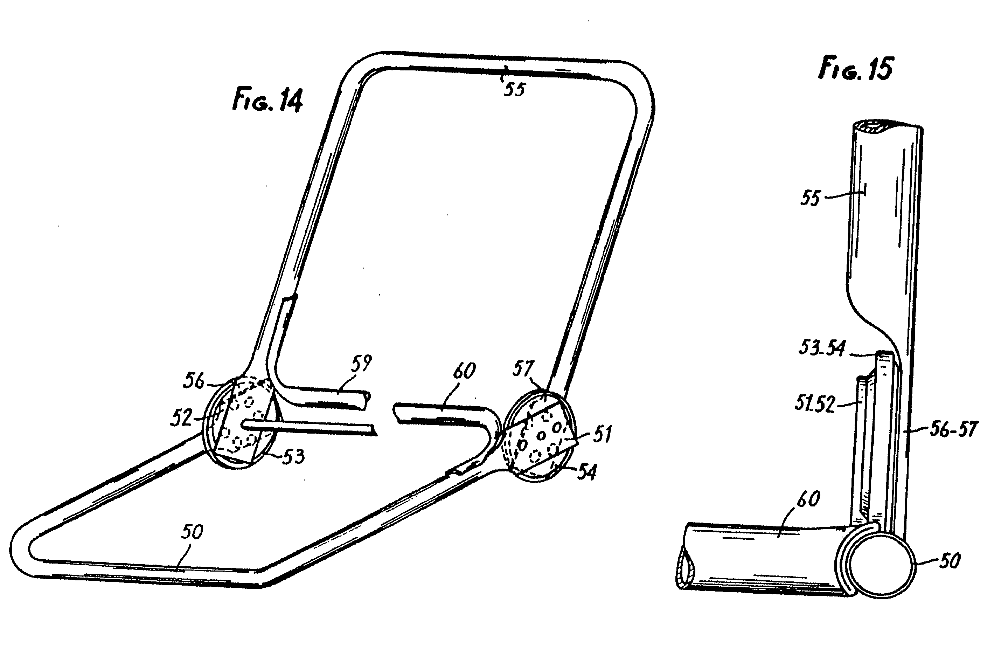

A la fig. 14, l'armature de l'assise est schématisée par un arceau tubulaire 50 dont les extrémités libres 51 et 52 sont aplaties, par exemple, dans une forme voisine de celle représentée à la fig. 4. Comme dans le cas de cette figure précédente, les mécanismes d'articulation 53, 54 sont ainsi fixés par leurs flasques fixes extérieurs sur l'arceau 50. De même, l'arceau 55 formant l'armature du dossier présente également des extrémités aplaties 56, 57 qui sont fixées sur le flasque mobile intérieur de chaque mécanisme d'articulation 53, 54. Comme cela est visible également à la fig. 14 et plus spécialement à la fig. 15, il est prévu des tubes horizontaux 59, 60 : le tube 59 forme un renfort inférieur du dossier et le tube 60, un renfort transversal de l'assise en rigidifiant ainsi parfaitement, dans la zone des mécanismes d'articulation 53, 54, l'armature du siège. Les parties plates 1a à 1g (fig. 2), 10 (fig. 4a) et 25 (fig. 13) favorisent le maintien de la bague de fermeture du mécanisme l'empêchant de se dérouler lors d'efforts anormaux produits sur le dossier et favorisent ainsi la sécurité.

Toutes les formes sus-décrites permettent d'augmenter considérablement la rigidité du tube réalisé le plus souvent en tôle de façon qu'il soit possible d'éliminer définitivement la fourrure interne généralement utilisée dans le cas des liaisons tube cylindrique avec une zone plate car, bien que les tubes 1, 6, 15, 20, 25, 50 et 55, employés dans la partie conformée de jonction, soient non traités, on obtient de par la forme proposée de chaque réalisation, l'élimination du phénomène de torsion du tube, permettant ainsi par un travail en compression et, avec des soudures par apport, soudure, bouchon, etc., un avantage certain donnant un gain de poids, une liaison facile du centrage des ouvertures 2, 13 parfaitement alignées, autorisant le montage automatique des organes de commande du mécanisme d'articulation, et de ce fait, augmentant considérablement la précision et donc évitant les jeux dans la zone d'articulation entre l'assise et le dossier.

## Revendications

1. Siège comportant une assise et un dossier ayant chacun une armature tubulaire et reliés entre eux par un mécanisme de réglage d'inclinaison entre l'assise et le dossier, ledit mécanisme de réglage d'inclinaison comprenant des flasques fixés à l'armature de l'assise et/ou du dossier, caractérisé en ce que chaque extrémité (1, 6) de l'armature de l'assise et du dossier est déformée par emboutissage ou moyens analogues pour obtenir une surface plane (7) convenablement raidie par des zones d'épaississement ou des lèvres (8, 9) débordantes assurant de ce fait une parfaite application de l'extrémité conformée du tube sur la face du flasque considéré du mécanisme d'articulation, chaque extrémité conformée du tube étant reliée au flasque correspondant par différents moyens de fixation en utilisant pour le centrage de ces pièces les unes par rapport aux autres les pions de jonction de chaque flasque du mécanisme d'articulation.

2. Siège suivant la revendication 1, caractérisé en ce que les extrémités des tubes formant l'armature de l'assise et du dossier du siège avec les flasques fixe et mobile des mécanismes d'articulation sont reliées les unes aux autres par soudure avec apport, par l'emploi des pions de jonction de chaque mécanisme d'articulation et de points de soudure sur la face arrière plane de la partie conformée.

3. Siège suivant la revendication 1, caractérisé en ce que la partie aplatie du tube présente de chaque côté des lèvres allongées horizontales (8, 9).

4. Siège suivant la revendication 1, caractérisé en ce que la partie aplatie du tube (15) présente une lèvre (17) s'étendant horizontalement et une lèvre (16) s'étendant perpendiculairement par rapport au plan de la zone aplatie.

5. Siège suivant la revendication 1, caractérisé en ce que l'extrémité du tube (20) aplatie présente des lèvres (21, 22) situées dans des plans perpendiculaires au plan central de la partie aplatie.

6. Siège suivant la revendication 1, caractérisé en ce que l'extrémité aplatie du tube (25) présente un bourrelet latéral et une lèvre (29) sur l'autre côté, sensiblement horizontale.

7. Siège suivant la revendication 1, caractérisé en ce que la partie aplatie (10) composée de ses bords relevés (8, 9) définit l'axe du tube pour obtenir un moment de flexion moindre par utilisation de l'inertie du tube jusqu'au delà de l'axe de l'articulation.

8. Siège suivant la revendication 1, caractérisé en ce que la partie plate (1a, 1g, 10 et 25) favorise le maintien de la bague de fermeture du mécanisme d'articulation par suppression des efforts anormaux dans cette zone provoqués par le dossier.

9. Siège suivant la revendication 1, caractérisé en ce que les pièces sont reliées les unes aux autres par des vis et écrous, des rivets et organes analogues solidaires des flasques.

## Claims

1. Seat comprising a seating portion and a backing portion, each having a tubular frame and connected together by an inclination adjusting mechanism between the seating portion and the backing portion, said inclination adjusting mechanism comprising flanges fixed to the seat frame and/or to the back frame, characterized in that each end (1, 6) of the seat and back frame is deformed by swaging or similar means for obtaining a flattened portion (7) which is appropriately stiffened by thickened areas or protruding lips (8, 9), thereby ensuring a perfect application of the shaped end of the tube on the face of the considered flange of the articulation mechanism, each shaped end of the tube being connected to the corresponding flange by various fixation means while using, for the centering of these parts the one with respect to the other, the junction studs of each flange of the articulation mechanism.

2. Seat according to claim 1, characterized in that the ends of the tubes forming the seat and back frames with the fixed and mobile flanges of the articulation mechanisms are connected together by supplying welding material, by using the junction studs of each articulation mechanism and welding spots on the plane rear face of the shaped portion.

3. Seat according to claim 1, characterized in that the flattened portion of the tube is formed on each side with horizontal elongated lips (8, 9).

4. Seat according to claim 1, characterized in that the flattened portion of the tube (15) is formed with a lip (17) extending horizontally and with a lip (16) extending perpendicularly to the plane of the flattened area.

5. Seat according to claim 1, characterized in that the flattened end of the tube (20) is formed with lips (21, 22) lying in planes perpendicular to the central plane of the flattened portion.

6. Seat according to claim 1, characterized in that the flattened end of the tube (25) is formed with a side bulging and with a substantially horizontal lip (29) on the other side.

7. Seat according to claim 1, characterized in that the flattened portion (10) composed of its raised edges (8, 9) defines the axis for the tube for obtaining a lesser flexural moment by using the inertia of the tube to beyond axis of the articulation mechanism.

8. Seat according to claim 1, characterized in that the flattened portion (1a, 1g, 10 and 25) assists in maintaining the closing ring of the articulation mechanism by cancellation of abnormal efforts in this area which are caused by the backing portion.

9. Seat according to claim 1, characterized in that the parts are connected together by means of screws and nuts, rivets and similar members solid with the flanges.

## Patentansprüche

1. Sitz mit einer Sitzfläche und einer Rückenlehne mit je einem rohrförmigen Rahmen und einer gegenseitigen Verbindung durch eine Neigungs-Verstellvorrichtung zwischen der Sitzfläche und der Rückenlehne, wobei die Neigungs-Verstellvorrichtung am Rahmen der Sitzfläche und/oder der Rückenlehne befestigte Flansche aufweist, dadurch gekennzeichnet, daß jedes Endstück (1, 6) des Rahmens von Sitzfläche und Rückenlehne durch Pressen oder ähnliche Mittel zu einer ebenen Fläche (7) verformt ist, welche durch Verdickungsbereiche oder hervortretende Lippen (8, 9) in zweckdienlicher Weise verstärkt sind, wodurch eine vollkommene Anpassung des angepaßten Endstücks des Rohres an die Fläche des betreffenden Flansches der Gelenkvorrichtung sichergestellt ist, wobei jedes angepaßte Endstück des Rohres mit dem entsprechenden Flansch durch verschiedene Befestigungsmittel verbunden ist, dabei zur Zentrierung dieser Bauteile zueinander die Verbindungsstifte jedes Flansches der Gelenkvorrichtung benutzt sind.

2. Sitz nach Anspruch 1, dadurch gekennzeichnet, daß die Endstücke der den Rahmen der Sitzfläche und der Rückenlehne des Sitzes bildenden Rohre mit den festen und beweglichen Flanschen der Gelenkvorrichtungen durch Auftragschweißen, durch die Verwendung der Verbindungsstifte jeder Gelenkvorrichtung und von Schweißpunkten auf der ebenen Rückseite des angepaßten Abschnitts verbunden sind.

3. Sitz nach Anspruch 1, dadurch gekennzeichnet, daß der abgeflachte Abschnitt des Rohres zu beiden Seiten waagerechte verlängerte Lippen (8, 9) aufweist.

4. Sitz nach Anspruch 1, dadurch gekennzeichnet, daß der abgeflachte Abschnitt des Rohres (15) eine sich waagerecht erstreckende Lippe (17) und eine sich rechtwinklig zur Ebene des abgeflachten Abschnitts erstreckende Lippe (16) aufweist.

5. Sitz nach Anspruch 1, dadurch gekennzeichnet, daß das abgeflachte Endstück des Rohres (20) Lippen (21, 22) aufweist, die in zur Mittelebene des abgeflachten Abschnitts rechtwinkligen Ebenen angeordnet sind.

6. Sitz nach Anspruch 1, dadurch gekennzeichnet, daß das abgeflachte Endstück des Rohres (25) einen seitlichen Wulst und auf der anderen Seite eine im wesentlichen waagerechte Lippe (29) aufweist.

7. Sitz nach Anspruch 1, dadurch gekennzeichnet, daß der von seinen geschweiften Rändern (8, 9) gebildete abgeflachte Abschnitt (10) die Achse des Rohres definiert, um durch über die Achse des Gelenkes hinausgehendes Ausnutzen der Trägheit des Rohres ein geringeres Biegemoment zu erhalten.

8. Sitz nach Anspruch 1, dadurch gekennzeichnet, daß der flache Abschnitt (1a, 1g, 10 und 25) die Beibehaltung des Verschlußringes der Gelenkvorrichtung durch Beseitigen der in diesem Bereich von der Rückenlehne hervorgerufenen anomalen Kräfte begünstigt.

9. Sitz nach Anspruch 1, dadurch gekennzeichnet, daß die Bauteile miteinander durch Schrauben und Muttern, Niete und ähnliche, mit den Flanschen fest verbundene Organe verbunden sind.

Fig.5

Fig.6

Fig.7

Fig.8

Fig.9

Fig.10

Fig.11

Fig.13

Fig.12

Fig. 15

55

56-57

53.54

51.52

50

60

Fig. 14

55

51

54

57

60

59

53

56

52

50